# EUROPÄISCHE PATENTSCHRIFT

(11) **EP 3 673 621 B1**
(45) Veröffentlichungstag und Bekanntmachung des Hinweises auf die Patenterteilung: **19.03.2025**
(21) Anmeldenummer: 18762795.5
(22) Anmeldetag: 22.08.2018
(51) Int. Cl.: H04L 43/0852, H04L 43/0823, H04L 43/106, G05B 19/042, G05B 19/048, G05D 1/00, H04L 43/16

(54) **VERFAHREN ZUR ÜBERTRAGUNG VON DATEN ZWISCHEN EINER ZENTRALEN STEUEREINRICHTUNG UND EINER MEHRZAHL DEZENTRALER GERÄTE UND ENTSPRECHENDE VORRICHTUNGEN**
METHOD FOR TRANSMITTING DATA BETWEEN A CENTRAL CONTROL APPARATUS AND A PLURALITY OF DECENTRALIZED DEVICES, AND CORRESPONDING MEANS
PROCÉDÉ DE TRANSMISSION DE DONNÉES ENTRE UN DISPOSITIF DE COMMANDE CENTRAL ET UNE PLURALITÉ D'APPAREILS DÉCENTRALISÉS ET DISPOSITIFS CORRESPONDANTS

(30) Priorität: 25.08.2017 DE 102017119578
(43) Veröffentlichungstag der Anmeldung: 01.07.2020
(73) Patentinhaber: Phoenix Contact GmbH & Co. KG, 32825 Blomberg (DE)
(72) Erfinder: OSTER, Viktor, 32825 Blomberg (DE); RAHLVES, Lutz, 30853 Langenhagen (DE)
(74) Vertreter: Blumbach · Zinngrebe Patentanwälte PartG mbB
(86) Internationale Anmeldenummer: PCT/EP2018/072679
(87) Internationale Veröffentlichungsnummer: WO 2019/038333

(56) Entgegenhaltungen:
- EP-A1- 2 302 841
- DE-T5- 112010 005 881
- US-A1- 2007 115 865
- MAHMOOD ANEEQ ET AL: "A simulation-based comparison of IEEE 802.11's timing advertisement and SyncTSF for clock synchronization", 2015 IEEE WORLD CONFERENCE ON FACTORY COMMUNICATION SYSTEMS (WFCS), IEEE, 27 May 2015 (2015-05-27), pages 1 - 4, XP033175431, DOI: 10.1109/WFCS.2015.7160569

## Beschreibung

Die Erfindung betrifft ein Verfahren zur Übertragung von Daten zwischen einer zentralen Steuereinrichtung und einer Mehrzahl dezentraler Geräte, sowie entsprechende Vorrichtungen, wobei insbesondere eine Broadcast- oder Multicast-Übertragung von Daten vorgesehen ist.

In modernen, automatischen Lager- und Logistiksystemen steigt seit Jahren der Bedarf an fahrerlosen Transportsystemen (FTS). Diese FTS basieren typischerweise auf flurgebundenen Fördersystemen mit automatisch gesteuerten Fahrzeugen, deren primäre Aufgabe der Materialtransport ist. Sie bestehen im Wesentlichen aus einem oder mehreren fahrerlosen Transportfahrzeugen (FTF) mit integrierter Steuerungsintelligenz, einer Leitsteuerung, Einrichtungen zur Standortbestimmung und eine Kommunikationseinrichtung für den Austausch von Auftragsdaten zwischen der Leitsteuerung und dem FTF. Als Kommunikationsmedium werden sehr häufig standardisierte Funksysteme wie z.B. WLAN oder Bluetooth eingesetzt.

Ziel der großen Anbieter bzw. der Betreiber solcher Logistiksysteme sind menschenleere Logistikhallen. Die FTF erhalten von einer Leitsteuerung ihre Fahraufträge und erledigen sie komplett autark. Sind ihre Akkus leer, so fahren sie automatisch in eine Ladestation um sie wieder zu laden. Prinzipiell ist absolut kein Eingriff von Menschen notwendig, wobei dies natürlich eine rein theoretische Betrachtung ist. Es kommt immer wieder vor, dass Fahrzeuge mit technischen Defekten ausfallen oder gewartet werden müssen. Auch eine z.B. verrutschte Ladung auf einem FTF kann einen Eingriff durch den Menschen notwendig machen. Aus Gründen der funktionalen Sicherheit müssen die Fahrzeuge, sobald ein Mensch die Anlage betritt, sicherheitsgerichtet stillgesetzt werden oder mit sicherer reduzierter Geschwindigkeit fahren.

Diese Anforderung wird zum Teil von einigen Herstellern nur bedingt sicherheitsgerichtet umgesetzt. Andere Hersteller setzen hierbei auf bestehende Safetyprotokolle wie z.B. PROFIsafe. Dieser Ansatz ist aus der Sicht der funktionalen Sicherheit der richtige Weg. Das PROFIsafe System ist seit vielen Jahren bewährt und kann auch über Funk wirtschaftlich übertragen werden.

Bedingt durch eine zyklische, bidirektionale Punkt zu Punkt Kommunikation zwischen der Sicherheitssteuerung, bei PROFIsafe als F-Host bezeichnet, und den sicherheitsgerichteten Feldgeräten, bei PROFIsafe als F-Devices bezeichnet, d.h. zwischen der sicheren Leitsteuerung und den FTF, entsteht ein großes Kommunikationsaufkommen. Dieses wächst linear mit der Anzahl der betriebenen FTF.

Zusätzlich müssen über diesen Übertragungskanal auch noch die Auftragsdaten übertragen werden. Aufgrund der verfügbaren Bandbreiten in Bluetooth bzw. WLAN Systemen ist die Anzahl von Fahrzeugen stark eingeschränkt. Diese Art der Lösung ist somit in mittleren bis größeren Anlagen nicht sinnvoll einsetzbar. Aufgrund der Adressierung und der verwendeten Sicherheitsmaßnahmen ist PROFIsafe für eine Broadcast- oder Multicast- Übertragung nicht geeignet.

In US 2007/0115865 A1 wird ein Verfahren beschrieben, das das Empfangen einer Multicast-Diagnoseanforderung in einem Knoten, Punkt oder Endgerät in einem drahtlosen lokalen Netz umfasst, wobei die Multicast-Diagnoseanforderung eine Berichtszeitüberschreitung definiert, die ein Zeitintervall angibt, in dem ein Multicast-Rahmen in dem Knoten, Punkt oder Endgerät empfangen werden sollte oder andernfalls eine Auslösebedingung erfüllt ist, und das Verfahren das Übertragen eines Multicast-Diagnoseberichts zu einem anderen Knoten, Punkt oder Endgerät in dem drahtlosen lokalen Netz umfasst, wenn die Auslösebedingung erfüllt ist.

Aus EP 2 115 948 A1 ist ein Verfahren zur optimierten Übertragung von Daten zwischen einer Steuereinrichtung und mehreren Feldgeräten, die über ein IP-basiertes Kommunikationsnetz miteinander verbunden sind, bekannt, wobei die Datenübertragung unter Verwendung eines Profinet-Protokolls gesteuert wird. Bei diesem Verfahren können die von einer Steuereinrichtung zu einer Vielzahl von Feldgeräten zu übertragenden Daten in einem einzigen in Datenfelder unterteilten Rahmen und die von einer Vielzahl von Feldgeräten zu einer Steuereinrichtung zu übertragenden Daten ebenfalls in nur einem gemeinsamen in Datenfeldern unterteilten Rahmen übertragen werden, um die Übertragungsrate gegenüber der mit Standard-Profinet-Rahmen erzielten Übertragungsrate durch eine Reduzierung von zu übertragenden Füllbits zu steigern.

In EP 1 509 005 A1 wird vorgeschlagen, zur Übertragung von Daten über ein Busnetz, an welches mehrere Teilnehmer angeschlossen sind und bei welchem je Kommunikationszyklus Daten mittels eines zur Punkt-zu-Punkt-Übertragung ausgebildeten Datenübertragungsprotokoll von wenigstens einem Teilnehmer zu wenigstens einem weiteren Teilnehmer übertragen werden, innerhalb des Punkt-zu-Punkt-Übertragungsprotokolls ein Broadcast-Telegramm zu definieren, innerhalb welchem ausgewählte Daten in einem Broadcast-Übertragungsmodus übertragen werden können.

Auch diese Verfahren sind jedoch nicht geeignet, in den oben beschriebenen fahrerlosen Transportsystemen eine sicherheitsgerichtete Kommunikation zwischen der Leitsteuerung und den FTF zu ermöglichen, die sinnvoll in mittleren bis größeren Anlagen einsetzbar ist.

Der Erfindung liegt daher die Aufgabe zugrunde, ein Verfahren sowie eine Steuer- und Datenübertragungsanlage zur Verfügung zu stellen, mit der eine vereinfachte oder verbesserte, insbesondere effizientere Datenübertragung zwischen einer Steuereinrichtung und dezentralen Geräten erreicht werden kann.

Diese Aufgabe wird durch die Merkmale der unabhängigen Ansprüche gelöst. Vorteilhafte Ausführungsformen sind Gegenstand der abhängigen Ansprüche, wobei die angegebenen Merkmale und Vorteile im Wesentlichen für alle unabhängigen Ansprüche gelten können.

Ein Kerngedanke der Erfindung ist in einer unidirektionalen Übertragung eines Multicast- oder Broadcast-Telegramms von einer zentralen Steuereinrichtung zu einer Mehrzahl dezentraler Geräte zu sehen, wobei das Datentelegramm insbesondere sichere Nutzdaten und zusätzliche Informationen zur Absicherung der Übertragung umfasst, und wobei zur Absicherung gegen eine systematische Verzögerung der Übertragung des Datentelegramms auf dem Übertragungsweg, welche bei einer unidirektionalen Übertragung üblicherweise nicht erkannt werden kann, vorgesehen ist, die Übertragungsdauer der Übertragung des Datentelegramms zu überwachen und bei Überschreiten einer vorgegebenen Übertragungsdauer eine vorgegebene Sicherheitsreaktion auszulösen, wobei die Erfindung zur Überwachung der Übertragungsdauer insbesondere zwei Varianten vorsieht, welche alternativ oder kumulativ eingesetzt werden können. Die erste Variante sieht eine Zeitsynchronisation zwischen Sende- und Empfangseinheit, d.h. zwischen der zentralen Steuereinrichtung und dem jeweiligen dezentralen Gerät, vor, während die zweite Variante eine Überwachung der Qualität einer separat ablaufenden bidirektionalen Datenübertragung mittels einer sender- und/oder empfängerseitigen Diagnoseeinheit vorsieht, welche den gleichen Übertragungsweg verwendet wie die unidirektionale Übertragung des Datentelegramms.

Ein Verfahren zur Übertragung von Daten zwischen einer zentralen Steuereinrichtung und wenigstens einem dezentralen Gerät umfasst die Schritte gemäß Anspruch 1.

Das unidirektionale Übertragen des Datentelegramms erfolgt typischerweise zu einer Mehrzahl dezentraler Geräte, wobei das Datentelegramm als Multicast-Datentelegramm, welches an eine vorgegebene Gruppe der dezentralen Geräte gerichtet ist, erzeugt und übertragen wird. Das Datentelegramm als Broadcast-Datentelegramm, welches an alle dezentralen Geräte gerichtet ist, zu erzeugen und zu übertragen ist ein weiteres Beispiel eines unidirektionalen Übertragens eines Datentelegramms.

Im Fall eines Multicast-Datentelegramms umfasst das Datentelegramm eine Multicast-Adresse, durch welche die Gruppe der dezentralen Geräte, an die das Datentelegramm gerichtet ist, adressiert wird. In diesem Fall kennt jedes der dezentralen Geräte, welches der Gruppe angehört, die entsprechende Multicast-Adresse.

Eine Gruppe dezentraler Geräte ist durch Angabe eines räumlichen Bereiches selektiert bzw. adressiert. Dazu ist das Datentelegramm zur Multicast-Übertragung von Daten zu einer Gruppe von Geräten ausgebildet, welche sich in einem definierten räumlichen Bereich befinden, wobei das Datentelegramm zu diesem Zweck eine Identifikationsinformation umfasst, welche den definierten räumlichen Bereich identifiziert. Das wenigstens eine dezentrale Gerät ist dazu ausgebildet zu erkennen, ob es sich aktuell in dem durch die Identifikationsinformation identifizierten Bereich befindet.

Die Erkennung, ob sich das jeweilige dezentrale Gerät in dem identifizierten räumlichen Bereich befindet, kann dabei auf unterschiedliche Arten realisiert werden. Beispielsweise kann das dezentrale Gerät eine Einrichtung zur Positionsbestimmung, wie zum Beispiel einen GPS-Empfänger, aufweisen, sowie Mittel zum Bestimmen, ob sich eine durch die Einrichtung zur Positionsbestimmung aktuell ermittelte Position innerhalb des identifizierten räumlichen Bereiches befindet. Es ist aber auch eine Vielzahl anderer Sensoren denkbar, die dazu geeignet sein können festzustellen, ob sich das dezentrale Gerät in dem identifizierten räumlichen Bereich befindet, wobei in identifizierbaren räumlichen Bereichen beispielsweise jeweils entsprechende Einrichtungen zum Aussenden von durch den jeweiligen Sensor detektierbare Signale angeordnet sein können.

Das Übertragen eines Broadcast- oder Multicast-Datentelegramms kann auch wiederholt erfolgen, insbesondere zyklisch in vorgegebenen Übertragungszyklen.

In einer ersten Variante der Erfindung weisen die Steuereinrichtung und das wenigstens eine dezentrale Gerät jeweils einen Zeitgeber auf. Bei der typischerweise vorgesehenen Mehrzahl dezentraler Geräte weist jedes der dezentralen Geräte jeweils einen Zeitgeber auf. Ferner ist vorgesehen, dass der Zeitgeber in der Steuereinrichtung mit dem jeweiligen Zeitgeber in dem wenigstens einen dezentralen Gerät synchronisiert wird. Die Synchronisation erfolgt dabei insbesondere vor Inbetriebnahme des jeweiligen wenigstens einen dezentralen Gerätes, sowie alternativ oder zusätzlich in vorgegebenen zyklischen Zeitabständen. Die Zeitabstände einer zyklischen Synchronisation können vorteilhaft in Abhängigkeit des Gangfehlers der eingesetzten Zeitgeber festgelegt werden.

In dieser Variante ist vorgesehen, dass durch die Steuereinrichtung bei Erzeugen des Datentelegramms ein Zeitstempel erzeugt wird, welcher innerhalb des Datentelegramms übertragen wird, wobei das Überwachen der Übertragungsdauer in Abhängigkeit des Zeitstempels erfolgt. Zum Erzeugen des Zeitstempels ruft die Steuereinrichtung insbesondere die aktuelle Zeit vom Zeitgeber ab.

Durch eine Synchronisation vor Inbetriebnahme des jeweiligen dezentralen Gerätes kann sichergestellt werden, dass die für die Überwachung der Übertragungsdauer eingesetzten Zeitgeber bei der ersten Übertragung eines Datentelegramms nach Inbetriebnahme bereits synchronisiert sind.

Vorteilhaft kann der Zeitgeber in der Steuereinrichtung bei der Synchronisation als Referenz-Zeitgeber dienen, mit welchem die Zeitgeber der dezentralen Geräte jeweils synchronisiert werden. Es ist auch denkbar, dass ein Referenz-Zeitgeber in einem separaten Referenz-Modul angeordnet ist und eine Synchronisation sowohl des Zeitgebers in der Steuereinrichtung als auch der Zeitgeber in den dezentralen Geräten mit diesem Referenz-Zeitgeber synchronisiert werden.

Der Referenz-Zeitgeber kann seinerseits vorteilhaft in vorgegebenen Zeitabständen mit einen Zeitnormal synchronisiert werden, beispielsweise mit Hilfe des Zeitzeichensenders DCF77.

In einer zweiten Variante der Erfindung umfasst das Verfahren die folgenden Schritte:
- Aufbauen einer zur bidirektionalen Kommunikation ausgebildeten Datenverbindung zwischen der Steuereinrichtung und dem wenigstens einen dezentralen Gerät, wobei das Datentelegramm über diese Datenverbindung unidirektional von der Steuereinrichtung zu dem wenigstens einen dezentralen Gerät übertragen wird, und
- Überwachen der Übertragungsqualität der Datenverbindung durch die Steuereinrichtung und/oder durch das wenigstens eine dezentrale Gerät, wobei das Überwachen der Übertragungsdauer der Übertragung des Datentelegramms in Abhängigkeit der überwachten Übertragungsqualität erfolgt.

In einer vorteilhaften Ausführungsform der Erfindung ist das wenigstens eine dezentrale Gerät als fahrerloses Transportfahrzeug (FTF) ausgebildet.

In dieser Ausgestaltung werden typischerweise in der oben beschriebenen zweiten Variante der Erfindung über eine bidirektionale Datenverbindung Auftragsdaten von der Steuereinrichtung zu individuellen der dezentralen Geräte übertragen, welche von dem jeweiligen dezentralen Gerät genutzt werden, um individuelle Transportaufträge abzuarbeiten.

Die bidirektionale Datenübertragung kann beispielsweise über ein drahtloses Netzwerk erfolgen, zum Beispiel unter Verwendung von WLAN oder Bluetooth.

Die Steuereinrichtung kann beispielsweise mittels einer entsprechenden Diagnoseeinheit die Übertragungsqualität der bidirektionalen Datenverbindung überwachen und insbesondere eine Verzögerungszeit ermitteln, mit der die Steuereinrichtung eine Antwort auf eine Datennachricht von dem dezentralen Gerät empfängt. Aus dieser Verzögerungszeit kann die Steuereinrichtung ableiten, wie lange die Übertragung der Datennachricht von der Steuereinrichtung zu dem dezentralen Gerät gedauert hat bzw. maximal gedauert hat. Alternativ oder zusätzlich kann eine analoge Überwachung mittels einer entsprechenden, im dezentralen Gerät angeordneten Diagnoseeinheit erfolgen, wobei das dezentrale Gerät insbesondere eine Verzögerungszeit ermitteln kann, mit der das dezentrale Gerät eine Antwort auf eine Datennachricht von der Steuereinrichtung empfängt.

Erfolgt nun die unidirektionale Übertragung des Broadcast- oder Multicast-Datentelegramms unter Verwendung der gleichen Datenverbindung, die für die bidirektionale Kommunikation eingesetzt wird, als unidirektionale Übertragung, so kann die jeweilige Diagnoseeinheit auch für diese Übertragung eine Übertragungsdauer abschätzen bzw. einen Wert ermitteln, welcher die maximal benötigte Übertragungsdauer angibt.

Auf diese Weise kann die jeweilige Diagnoseeinheit die Übertragungsdauer der Übertragung des Datentelegramms von der zentralen Steuereinrichtung zu dem wenigstens einen dezentralen Gerät überwachen und für den Fall, dass die Übertragungsdauer einen vorgegebenen Wert überschreitet, eine vorbestimmte Sicherheitsreaktion auslösen. Die Sicherheitsreaktion kann für den Fall einer in der Steuereinrichtung angeordneten Diagnoseeinheit beispielsweise darin bestehen, dass das betreffende dezentrale Gerät oder alle dezentralen Geräte stillgesetzt werden, wobei zu diesem Zweck ein entsprechender Abschaltbefehl von der Steuereinrichtung zu dem oder den jeweiligen dezentralen Geräten übertragen wird. Für den Fall einer in dem dezentralen Gerät angeordneten Diagnoseeinheit kann die Sicherheitsreaktion ebenfalls vorteilhaft darin bestehen, das jeweilige dezentrale Gerät stillzusetzen, wobei die Stillsetzung durch die im dezentralen Gerät angeordnete Diagnoseeinheit initiiert wird. Besonders vorteilhaft wird somit ein dezentrales Gerät abgeschaltet bzw. stillgesetzt oder auf andere Weise in einen gefahrlosen Zustand überführt, wenn die Diagnoseeinheit des betreffenden dezentralen Gerätes feststellt, dass die Kommunikation zu lange dauert, oder wenn das dezentrale Gerät einen entsprechenden Abschaltbefehl von der Steuereinrichtung empfängt.

Zur drahtlosen unidirektionalen Übertragung des Broadcast- oder Multicast-Datentelegramms umfasst die Steuereinrichtung vorteilhaft eine Sendeeinheit und die dezentralen Geräte umfassen entsprechende Empfangseinheiten. Die Übertragung des Broadcast- oder Multicast-Datentelegramms muss jedoch nicht zwingend drahtlos erfolgen. Vielmehr kann auch eine drahtgebundene Datenübertragung vorgesehen sein.

Ferner können zur Übertragung des Broadcast- oder Multicast-Datentelegramms verschiedene bekannte oder standardisierte Übertragungsprotokolle eingesetzt werden. Es können auch bekannte Protokolle auf geeignete Weise ergänzt werden oder es können neue Protokolle vorgesehen werden, mit deren Hilfe die Datenübertragung implementiert wird.

Das Multicast- oder Broadcast-Datentelegramm wird insbesondere zur Übertragung sicherheitsrelevanter bzw. sicherheitsgerichteter Daten eingesetzt. Die sicherheitsgerichteten Daten können bei als FTF ausgebildeten dezentralen Geräten beispielsweise dazu dienen, die dezentralen Geräte sicherheitsgerichtet stillzusetzen oder anzuweisen, mit einer sicheren reduzierten Geschwindigkeit zu fahren. Die Übertragung der sicherheitsgerichteten Daten in Form des Multicast- oder Broadcast-Datentelegramms kann beispielsweise in Antwort auf ein von der Steuereinrichtung empfangenes Sensorsignal erfolgt, welches beispielsweise signalisiert, dass ein Mensch die Anlage betreten hat. Ein entsprechender Sensor könnte beispielsweise als Lichtgitter oder als Sicherheitstür ausgebildet sein.

Es ist jedoch auch jede andere geeignete Art sicherheitsgerichteter oder sicherheitsrelevanter Daten denkbar, wie sie im Bereich der funktionalen Sicherheit technischer Anlagen oder Automatisierungssystemen eingesetzt werden.

Zur Übertragung des Multicast- oder Broadcast-Datentelegramms wird besonders vorteilhaft ein sicheres Kommunikationsprotokoll eingesetzt, welches an sich bekannte Methoden zur Fehlervermeidung und Fehleraufdeckung einsetzt. Insbesondere werden Protokolle eingesetzt, die unterschiedliche Fehlertypen wie z.B. Verfälschung, Verlust, oder Vertauschung beherrschen. Beispielsweise kann eine fortlaufende Nummer, eine Senderkennung und eine CRC-Prüfsumme vorgesehen sein.

Um bei der unidirektionalen Übertragung des Multicast- oder Broadcast-Datentelegramms auch den Fehlertyp der Verzögerung zu beherrschen, wofür üblicherweise eine bidirektionale Kommunikation erforderlich ist, sieht die Erfindung die Überwachung der Übertragungsdauer des Multicast- oder Broadcast-Datentelegramms vor.

Eine Steuereinrichtung zum Steuern einer Mehrzahl dezentraler Geräte, welche zum Ausführen des oben beschriebenen Verfahrens geeignet ist, umfasst ein Mittel zum Erzeugen eines Datentelegramms zur Multicast-Übertragung von Daten zu einer Gruppe von Geräten, ein Mittel zum unidirektionalen Übertragen des Datentelegramms zu wenigstens einem dezentralen Gerät, und ein Mittel zum Überwachen der Übertragungsdauer der unidirektionalen Übertragung des Datentelegramms von der zentralen Steuereinrichtung zu dem wenigstens einen dezentralen Gerät.

In einer ersten vorteilhaften Ausgestaltungsvariante der Steuereinrichtung umfasst das Mittel zum Überwachen der Übertragungsdauer einen Zeitgeber und Mittel zum Synchronisieren des Zeitgebers mit einem in dem wenigstens einen dezentralen Gerät angeordneten Zeitgeber, wobei das Mittel zum Erzeugen des Datentelegramms dazu ausgebildet ist, einen Zeitstempel zu erzeugen und diesen innerhalb des Datentelegramms zu übertragen.

In einer zweiten vorteilhaften Ausgestaltungsvariante der Steuereinrichtung ist diese dazu ausgebildet, eine zur bidirektionalen Kommunikation ausgebildete Datenverbindung mit dem wenigstens einen dezentralen Gerät aufzubauen, wobei das Mittel zum unidirektionalen Übertragen des Datentelegramms zum unidirektionalen Übertragen des Datentelegramms über die Datenverbindung ausgebildet ist, und das Mittel zum Überwachen der Übertragungsdauer eine Diagnoseeinheit umfasst, welche dazu ausgebildet ist, die Übertragungsqualität der zur bidirektionalen Kommunikation ausgebildeten Datenverbindung zu überwachen, die Übertragungsdauer der unidirektionalen Übertragung des Datentelegramms in Abhängigkeit der überwachten Übertragungsqualität zu überwachen, und eine vorbestimmte Sicherheitsreaktion auszulösen, wenn die Übertragungsdauer einen vorgegebenen Wert überschreitet.

Die oben genannte technische Aufgabe wird ferner gelöst durch eine durch eine zentrale Steuereinrichtung steuerbare Vorrichtung, welche dazu ausgebildet ist, von der Steuereinrichtung ein Datentelegramm zur Multicast-Übertragung von Daten zu empfangen, wobei das Datentelegramm einen Zeitstempel umfasst, und welche einen Zeitgeber und Mittel zum Synchronisieren des Zeitgebers mit einem in der Steuereinrichtung angeordneten Zeitgeber umfasst, sowie ein Mittel zum Überwachen der Übertragungsdauer der Übertragung des Datentelegramms von der zentralen Steuereinrichtung zu der Vorrichtung in Abhängigkeit des in dem Datentelegramm enthaltenen Zeitstempels und unter Verwendung des Zeitgebers, und ein Mittel zum Auslösen einer vorbestimmten Sicherheitsreaktion, wenn die Übertragungsdauer einen vorgegebenen Wert überschreitet.

Im Rahmen der Erfindung liegt auch eine Steuer- und Datenübertragungsanlage, welche eine oben beschriebene Steuereinrichtung und wenigstens eine oben beschriebene, durch die Steuereinrichtung steuerbare Vorrichtung umfasst, sowie ein Kommunikations-Netzwerk, über welches die Steuereinrichtung Daten zu der wenigstens eine Vorrichtung übertragen kann.

Es sei angemerkt, dass die Steuereinrichtung, die durch die Steuereinrichtung steuerbare Vorrichtung, sowie die Steuer- und Datenübertragungsanlage jeweils vorteilhaft dazu ausgebildet sein können, die unterschiedlichen Ausgestaltungen des oben beschriebenen Verfahrens auszuführen.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. Es zeigt dabei
- Fig. 1: eine schematische Darstellung eines als fahrerloses Transportfahrzeug ausgebildeten dezentralen Gerätes,
- Fig. 2: eine schematische Darstellung einer zeitlichen Synchronisation in einer ersten bevorzugten Ausführungsform einer erfindungsgemäßen Steuer- und Datenübertragungsanlage,
- Fig. 3: eine schematische Darstellung einer Betriebsphase der in Fig. 2 dargestellten Steuer- und Datenübertragungsanlage, und
- Fig. 4: eine schematische Darstellung einer zweiten bevorzugten Ausführungsform einer erfindungsgemäßen Steuer- und Datenübertragungsanlage.

Die Erfindung ermöglicht eine unidirektionale, insbesondere zyklische, Übertragung sicherer Ausgangsdaten von einem zentralen Punkt oder einer zentralen Steuerung an mehr als ein dezentrales Gerät wie beispielsweise ein fahrerloses Transportfahrzeug (FTF) in Form eines Multicast- oder Broadcast-Datentelegramms, wobei die Übertragung insbesondere drahtlos erfolgt, beispielsweise über eine Funkstrecke oder mittels optischer Übertragung. Die im Folgenden dargestellten Ausführungsbeispiele betreffen die Steuerung von FTFs und gehen von einer drahtlosen Übertragung der Multicast- oder Broadcast-Datentelegramme aus. Es ist aber auch der Einsatz der Erfindung in kabelgebundenen Applikationen denkbar, um auch dort Bandbreite einzusparen.

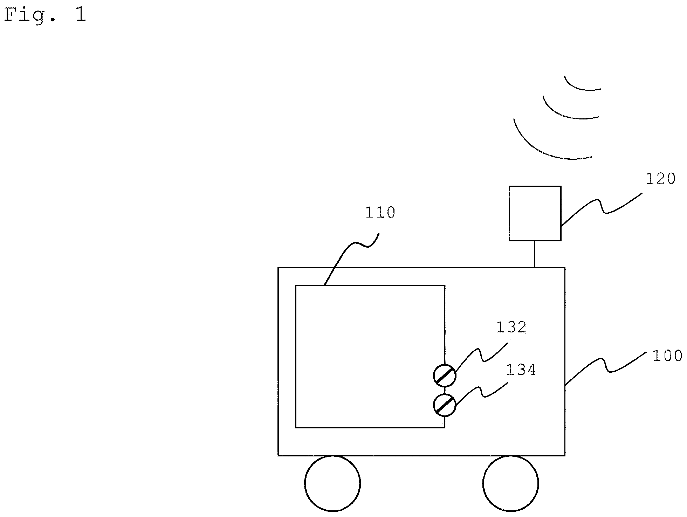

Fig. 1 zeigt eine schematische Darstellung eines als fahrerloses Transportfahrzeug (FTF) ausgebildeten dezentralen Gerätes 100. Das FTF 100 umfasst eine Empfangseinheit 110 zum Auswerten von Datentelegrammen, die mittels einer Empfangsschnittstelle 120 empfangen wurden, wobei die Empfangsschnittstelle 120 beispielsweise zum Empfangen von Funksignalen ausgebildet ist. Im dargestellten Beispiel ist das FTF 100 dazu ausgebildet, in Abhängigkeit von sicheren Ausgangsdaten, die von der Empfangseinheit 110 empfangen wurden, die sicheren Ausgänge 132 und 134 anzusteuern. Beispielsweise dienen die sicheren Ausgänge 132 und 134 der Antriebssteuerung des FTF 100.

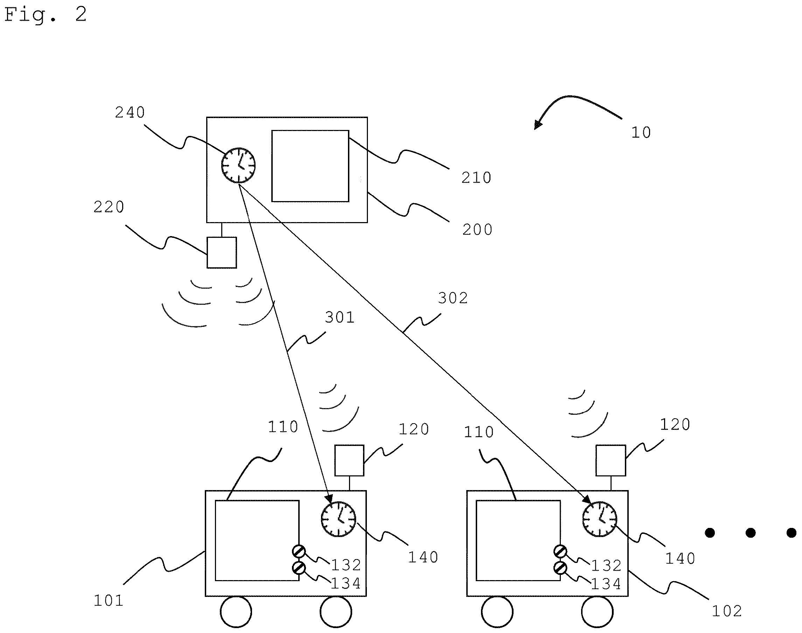

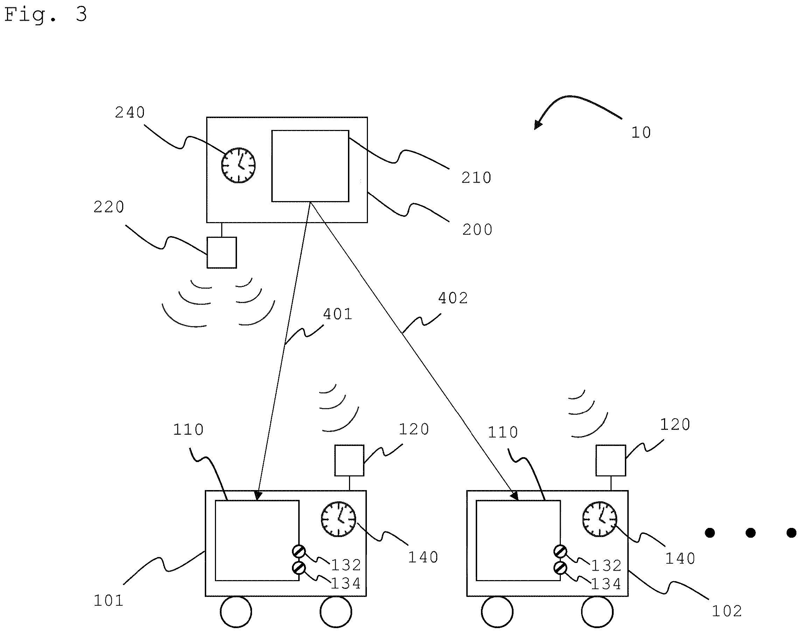

Die Figuren 2 und 3 zeigen eine schematische Darstellung einer ersten bevorzugten Ausführungsform einer erfindungsgemäßen Steuer- und Datenübertragungsanlage 10, welche eine zentrale Steuereinrichtung 200, sowie eine Mehrzahl als FTF ausgebildete dezentrale Geräte umfasst, von denen der einfacheren Darstellung halber beispielhaft nur die Geräte 101 und 102 gezeigt sind. Es sei angemerkt, dass die Erfindung besonders vorteilhaft in einer Anlage mit einer Vielzahl dezentraler Geräte eingesetzt werden kann.

Die Steuereinrichtung 200 umfasst eine Sendeeinheit 210, welche ein Multicast- oder Broadcast-Datentelegramm mittels einer Sendeschnittstelle 220 aussendet. In diesem Datentelegramm befinden sich im dargestellten Ausführungsbeispiel zum einen die sicheren Nutzdaten für die sicheren Ausgänge 132 und 134 der jeweiligen Geräte 101 und 102, sowie zusätzliche Informationen zur Absicherung der Übertragung. Zur Absicherung der Kommunikation vorteilhaft auf bereits bestehende Mechanismen, zum Beispiel aus PROFIsafe oder Interbus-Safety zurückgreifen. Für die zu erkennenden Fehler können insbesondere eine fortlaufende Nummer, eine Senderkennung und eine CRC-Prüfsumme im Datentelegramm vorgesehen sein. Mit diesen Maßnahmen kann eine Vertauschung und eine Veränderung von Telegrammen aufgedeckt werden. Mit der fortlaufenden Nummer kann in dem jeweiligen Empfänger 101 bzw. 102 ein Watchdog getriggert werden. Diese Maßnahmen sind mit existierenden Safetyprotokollen vergleichbar. Alternativ zur Senderkennung können Standardmechanismen eines Netzwerkes wie zum Beispiel Subnetze benutzt werden.

Da es sich aber bei der Übertragung des Multicast- oder Broadcast-Datentelegramms um eine unidirektionale Kommunikation handelt, können Komponenten, die eine systematische Verzögerung auf dem Übertragungsweg verursachen, auch als Komponenten mit speicherndem Verhalten bezeichnet, nicht erkannt werden.

Aus diesem Grund verwendet zum Beispiel PROFIsafe eine bidirektionale Kommunikation zur Aufdeckung solcher Fehler, mit den einleitend bereits beschriebenen Nachteilen, insbesondere bei Einsatz in der Logistikbranche.

Um solche Fehler auch bei einer unidirektionalen Kommunikation aufdecken zu können, sieht die Erfindung Zeitgeber 140 bzw. 240 jeweils in den FTFs 101 und 102 sowie in der Steuereinrichtung 200 vor, wobei vor dem Start der einzelnen FTF eine Zeitsynchronisation zwischen der Sendestation 200 und den Empfangseinheiten 101 und 102 erfolgt. Hierfür gibt es bereits bewährte Standards für die Anwendung im Ethernet-Umfeld, z.B. den Standard IEEE 1588 oder das Network Time Protocol (NTP), welche bei Einsatz einer ethernetbasierten Kommunikation verwendet oder für den Einsatz mit anderen Übertragungsprotokollen entsprechend angepasst werden können.

Sobald eine Empfangseinheit 101 bzw. 102 über die aktuelle Zeit verfügt und gültige Safetyprotokolle empfängt, kann sie die Nutzdaten für gültig erklären und an den Ausgängen 132 und 134 ausgeben. Zu diesem Zweck fügt die Sendeeinheit 210 jedem auszusendenden Multicast- oder Broadcast-Datentelegramm unter Verwendung des Zeitgebers 240 einen Zeitstempel hinzu, und die jeweilige Empfangseinheit 110 überwacht die Übertragungsdauer des unidirektional übertragenen Datentelegramms in Abhängigkeit des Zeitstempels und unter Verwendung des synchronisierten Zeitgebers 140. Im Fall einer Überschreitung eines vorgegebenen und im jeweiligen dezentralen Gerät gespeicherten Grenzwertes löst die Empfangseinheit 110 eine vorgegebene Sicherheitsreaktion aus, wobei diese beispielsweise im Abschalten des Antriebs besteht.

Im dargestellten Ausführungsbeispiel erfolgt die Zeitsynchronisation nicht ausschließlich beim Einschalten der Anlage. Sie erfolgt zudem in geeigneten Abständen, um zum einen die Uhrzeiten in den Empfangseinheiten 101 bzw. 102 aktuell zu halten, und zum anderen um Empfangseinheiten, welche später eingeschaltet wurden oder ausgefallen waren, wieder in das laufende System zu reintegrieren.

Bevor eine Empfangseinheit 110 die sicheren Ausgänge einschalten darf, ist somit eine erfolgreiche Zeitsynchronisation zwischen der Sendeeinheit 210 und der jeweiligen Empfangseinheit 110 notwendig. Diese Zeitsynchronisation, welche im dargestellten Ausführungsbeispiel beim Einschalten und in geeigneten, zeitlichen Abständen im laufenden Betrieb erfolgt, ist in Fig. 2 symbolisch durch die Pfeile 301 und 302 dargestellt.

Bewertet die Empfangseinheit 110 die Zeitsynchronisation als positiv abgeschlossen, beginnt die in Fig. 3 dargestellte Betriebsphase, in welcher die Sendeeinheit 210 Broadcast-Datentelegramme an alle Teilnehmer oder Multicast-Datentelegramme an Teilnehmergruppen sendet, welche die sicherheitsgerichteten Ausgangsdaten enthalten, im dargestellten Ausführungsbeispiel beispielsweise die Freigabe für die Antriebe der jeweiligen FTF 101 bzw. 102. Die Übertragung der Multicast- oder Broadcast-Datentelegramme ist in Fig. 3 symbolisch durch die Pfeile 401 und 402 dargestellt.

Es sei noch angemerkt, dass die beschriebenen Komponenten eines dezentralen Gerätes nicht unbedingt in das dezentrale Gerät integriert sein müssen, sondern auch Bestandteile eines separaten abgesetzten Moduls bilden können, wobei insbesondere auch nur die Funktionalität der Überwachung der Übertragungsdauer und/oder des Auslösens einer Sicherheitsreaktion in ein separates Modul ausgelagert werden können, um bestehende Geräte um eine erfindungsgemäße Funktionalität zu erweitern.

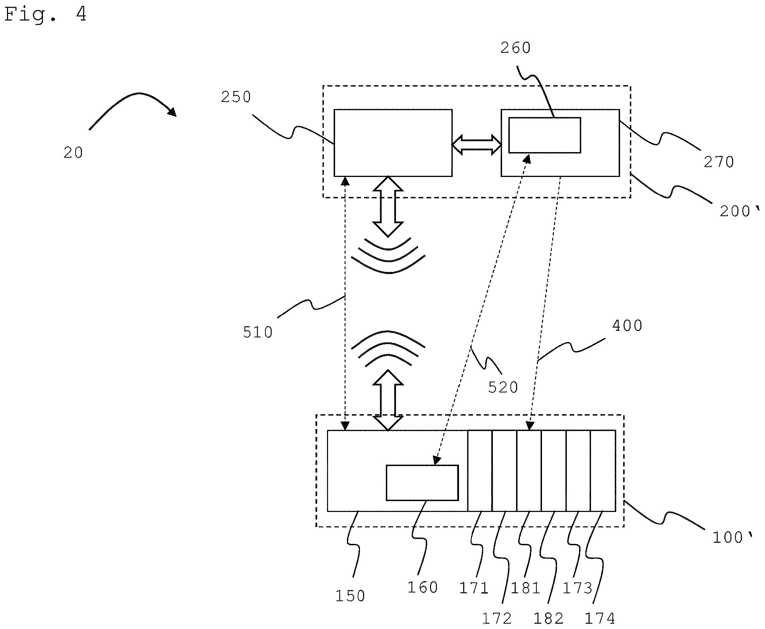

In Fig. 4 ist eine schematische Darstellung einer zweiten bevorzugten Ausführungsform einer erfindungsgemäßen Steuer- und Datenübertragungsanlage 20 dargestellt. Der einfacheren Darstellung halber ist in Fig. 4 nur ein dezentrales Gerät 100' dargestellt, wobei angemerkt sei, dass auch in dieser Ausführungsform vorteilhaft eine Vielzahl dezentraler Geräte vorgesehen sind.

In dieser Ausführung ist vorgesehen, die Qualität der Datenübertragung durch eine Diagnoseeinheit zu überwachen. Da die FTSs zur Abwicklung der Aufträge eine bidirektionale Datenverbindung benötigen, kann diese zur Überwachung der Verbindungsqualität benutzt werden. Voraussetzung dabei ist, dass die sicherheitsrelevanten Daten über dieselbe Verbindung ausgetauscht werden, zwar unidirektional aber durch die gleiche Datenverbindung. Somit entfällt die Notwendigkeit der Übermittlung des Zeitstempels, da diese Diagnoseeinheit beim Überschreiten der maximal zulässigen Verzögerungszeit an die sichere Logik die Information liefert, die zum Abschalten des FTSs führt.

In der in Fig. 4 dargestellten Ausführungsform ist eine Steuereinrichtung 200' vorgesehen, welche eine übergeordnete SPS 250 und eine sichere SPS 270 umfasst, die miteinander kommunizieren können. Das dezentrale, als FTF ausgebildete Gerät 100' umfasst eine lokale SPS 150 mit einer Mehrzahl daran angeschlossener E/A-Geräte, wobei diese Standard-E/A-Geräte 171, 172, 173 und 174, sowie sichere bzw. sicherheitsgerichtete E/A-Geräte 181 und 182 umfasst. Die E/A-Geräte können mit der lokalen SPS 150 beispielsweise über einen Bus verbunden sein, zum Beispiel ein Backplane-Bus. Die Auftragsdaten des FTF 100' werden mittels bidirektionaler Kommunikation von der übergeordneten SPS 250 zur lokalen SPS 150 übertragen.

Diese Kommunikation ist mit dem Pfeil 510 dargestellt. Im dargestellten Ausführungsbeispiel ist die Kommunikation 510 als drahtlose Kommunikation ausgebildet.

Im dargestellten Ausführungsbeispiel wird das Multicast- oder Broadcast-Datentelegramm von der sicheren SPS 270 unidirektional von der Steuereinrichtung 200' zum FTF 100' übertragen, wobei die gleiche Kommunikationsverbindung wie für die bidirektionale Übertragung der Auftragsdaten eingesetzt wird. Mit anderen Worten wird das Multicast- oder Broadcast-Datentelegramm zu der übergeordneten SPS 250 gesendet und von dieser zur lokalen SPS 150 übertragen und ausgewertet. Bei Gültigkeit werden die in dem Multicast- oder Broadcast-Datentelegramm enthaltenen sicherheitsgerichteten Daten an die sicheren E/A-Geräte 181 bzw. 182 ausgegeben, die im dargestellten Ausführungsbeispiel als sichere Ausgänge ausgebildet sind. Die unidirektionale Übertragung der sicheren Ausgangsdaten zu den sicheren Ausgängen 181 und 182 ist in Fig. 4 mit dem Pfeil 400 dargestellt.

Mittels einer in der sicheren SPS 270 angeordneten Diagnoseeinheit 260 kann die Übertragungsqualität der bidirektionalen Datenübertragung 510 erfolgen, wobei die Diagnoseeinheit 260 die Übertragung eines Abschaltbefehls zu dem FTF 100' veranlasst, wenn die Überwachung der bidirektionalen Datenübertragung 510, die zur Übertragung der Auftragsdaten eingesetzt wird, ergibt, dass eine vorgegebene Verzögerungszeit überschritten wird.

Alternativ oder zusätzlich kann auch im FTF 100' eine Diagnoseeinheit 160 angeordnet sein, welche die Übertragungsqualität der bidirektionalen Datenübertragung 510 überwacht und im Fall der Überschreitung einer vorgegebenen Verzögerungszeit den Antrieb des FTF 100' abschaltet.

Denkbar ist auch, dass zwischen den Diagnoseeinheiten 260 und 160 zu Testzwecken in zyklischen Abständen eine bidirektionale Datenübertragung erfolgt, welche in Fig. 4 als Pfeil 520 dargestellt ist, und die Übertragungsqualität dieser bidirektionalen Datenübertragung 520 überwacht wird.

Die Verwendung der Erfindung ist nicht nur auf FTFs beschränkt, sondern kann unabhängig von der Infrastruktur in beliebigen Applikationen verwendet werden, in denen Broadcast- oder Multicast-Nachrichten an viele Teilnehmer mit einer definierten zeitlichen Erwartung geschickt werden sollen.

Das erfindungsgemäße Verfahren lässt auch zum Beispiel Gruppenschaltungen über die Cloud für Energieversorgungsnetze zu.

Die Erfindung bietet eine Vielzahl von Vorteilen, wobei ein besonderer Vorteil darin besteht, dass eine große Anzahl von Empfängern sicherheitsgerichtet Daten empfangen kann, ohne das jeweilige Netzwerk mit einer sonst notwendigen Punkt zu Punkt Kommunikation zu überlasten. Auf diese Weise wird Bandbreite eingespart und eine verlässliche Broadcast- oder Multicast-Übertragung gewährleistet.

Zudem kann die Erfindung in verschiedenen Applikationsfeldern von Safety bis Energieversorgung Verwendung finden, bietet eine kostengünstige Lösung und ermöglicht schnelle Reaktionszeiten, da alle Teilnehmer gleichzeitig angesprochen werden können.

Bestimmte Applikationen, beispielsweise die gleichzeitige sichere Ansteuerung einer großen Anzahl FTFs in der Logistikbranche, werden durch das erfindungsgemäße Verfahren überhaupt erst möglich gemacht.

Auch ist ein gleichzeitiges Umschalten der Betriebsarten möglich, zum Beispiel eine Reduzierung der Geschwindigkeit, wenn eine Person den Gefahrenbereich betritt. Das eröffnet weitere Möglichkeiten der Interaktion Mensch Maschine.

## Patentansprüche

1. Verfahren zur Übertragung von Daten zwischen einer zentralen Steuereinrichtung (200, 200') und wenigstens einem dezentralen Gerät (101, 102, 100'), mit den Schritten:
- Erzeugen, in der zentralen Steuereinrichtung (200, 200'), eines Datentelegramms zur Multicast-Übertragung von Daten zu einer Gruppe von Geräten, welche sich in einem definierten räumlichen Bereich befinden, wobei das Datentelegramm eine Identifikationsinformation umfasst, welche den definierten räumlichen Bereich identifiziert,
- unidirektionales Übertragen des Datentelegramms von der zentralen Steuereinrichtung (200, 200') zu wenigstens einem dezentralen Gerät (101, 102, 100'), wobei das wenigstens eine dezentrale Gerät dazu ausgebildet ist zu erkennen, ob es sich aktuell in dem durch die Identifikationsinformation identifizierten räumlichen Bereich befindet,
- Überwachen der Übertragungsdauer der Übertragung des Datentelegramms von der zentralen Steuereinrichtung (200, 200') zu dem wenigstens einen dezentralen Gerät (101, 102, 100'), und
- Auslösen einer vorbestimmten Sicherheitsreaktion, wenn die Übertragungsdauer einen vorgegebenen Wert überschreitet.

2. Verfahren nach Anspruch 1, wobei die Steuereinrichtung (200) und das wenigstens eine dezentrale Gerät (101, 102) jeweils einen Zeitgeber (240, 140) umfassen, und wobei das Verfahren ferner die folgenden Schritte umfasst:
- Synchronisation des Zeitgebers (240) in der Steuereinrichtung (200) mit dem jeweiligen Zeitgeber (140) in dem wenigstens einen dezentralen Gerät (101, 102),
- Erzeugen eines Zeitstempels durch die Steuereinrichtung (200) und Übertragen des Zeitstempels innerhalb des Datentelegramms, wobei das Überwachen der Übertragungsdauer in Abhängigkeit des Zeitstempels erfolgt.

3. Verfahren nach Anspruch 2, wobei die Synchronisation der Zeitgeber (240, 140) vor Inbetriebnahme des wenigstens einen dezentralen Gerätes (101, 102) und/oder in vorgegebenen zyklischen Zeitabständen erfolgt.

4. Verfahren nach einem der vorstehenden Ansprüche, ferner umfassend die folgenden Schritte:
- Aufbauen einer zur bidirektionalen Kommunikation (510, 520) ausgebildeten Datenverbindung zwischen der Steuereinrichtung (200') und dem wenigstens einen dezentralen Gerät (100'), wobei das Datentelegramm über diese Datenverbindung unidirektional von der Steuereinrichtung (200') zu dem wenigstens einen dezentralen Gerät (100') übertragen wird, und
- Überwachen der Übertragungsqualität der Datenverbindung durch die Steuereinrichtung (200') und/oder durch das wenigstens eine dezentrale Gerät (100'), wobei das Überwachen der Übertragungsdauer der Übertragung des Datentelegramms in Abhängigkeit der überwachten Übertragungsqualität erfolgt.

5. Verfahren nach einem der vorstehenden Ansprüche, wobei das wenigstens eine dezentrale Gerät (101 102 100') als fahrerloses Transportfahrzeug ausgebildet ist.

6. Verfahren nach einem der vorstehenden Ansprüche, wobei die Übertragung des Datentelegramms über ein drahtloses Netzwerk erfolgt.

7. Verfahren nach einem der vorstehenden Ansprüche, wobei das Datentelegramm zur Übertragung sicherheitsrelevanter Daten eingesetzt wird.

8. Verfahren nach einem der vorstehenden Ansprüche, wobei zum Übertragen des Datentelegramms ein sicheres Kommunikationsprotokoll eingesetzt wird.

9. Steuereinrichtung (200, 200') zum Steuern einer Mehrzahl dezentraler Geräte (101, 102, 100'), umfassend
- ein Mittel zum Erzeugen eines Datentelegramms zur Multicast-Übertragung von Daten zu einer Gruppe der Mehrzahl von dezentralen Geräten (101, 102, 100'), wobei sich die Geräte der Gruppe in einem definierten räumlichen Bereich befinden, und wobei das Datentelegramm eine Identifikationsinformation umfasst, welche den definierten räumlichen Bereich identifiziert,
- ein Mittel zum unidirektionalen Übertragen des Datentelegramms zu wenigstens einem dezentralen Gerät (101, 102, 100'), wobei das wenigstens eine dezentrale Gerät dazu ausgebildet ist zu erkennen, ob es sich aktuell in dem durch die Identifikationsinformation identifizierten räumlichen Bereich befindet, und
- ein Mittel zum Überwachen der Übertragungsdauer der unidirektionalen Übertragung des Datentelegramms von der zentralen Steuereinrichtung (200, 200') zu dem wenigstens einen dezentralen Gerät (101, 102, 100').

10. Steuereinrichtung (200) nach Anspruch 9, wobei das Mittel zum Überwachen der Übertragungsdauer einen Zeitgeber (240) und Mittel zum Synchronisieren des Zeitgebers (240) mit einem in dem wenigstens einen dezentralen Gerät (101, 102) angeordneten Zeitgeber (140) umfasst, und wobei das Mittel zum Erzeugen des Datentelegramms dazu ausgebildet ist, einen Zeitstempel zu erzeugen und diesen innerhalb des Datentelegramms zu übertragen.

11. Steuereinrichtung (200') nach einem der Ansprüche 9 oder 10, dazu ausgebildet, eine zur bidirektionalen Kommunikation (510, 520) ausgebildete Datenverbindung mit dem wenigstens einen dezentralen Gerät aufzubauen, wobei
- das Mittel zum unidirektionalen Übertragen des Datentelegramms zum unidirektionalen Übertragen des Datentelegramms über die Datenverbindung ausgebildet ist, und
- das Mittel zum Überwachen der Übertragungsdauer eine Diagnoseeinheit (260) umfasst, welche dazu ausgebildet ist,
- die Übertragungsqualität der zur bidirektionalen Kommunikation (510, 520) ausgebildeten Datenverbindung zu überwachen,
- die Übertragungsdauer der unidirektionalen Übertragung des Datentelegramms in Abhängigkeit der überwachten Übertragungsqualität zu überwachen, und
- eine vorbestimmte Sicherheitsreaktion auszulösen, wenn die Übertragungsdauer einen vorgegebenen Wert überschreitet.

12. Vorrichtung (101, 102), insbesondere ausgebildet als fahrerloses Transportfahrzeug, steuerbar durch eine zentrale Steuereinrichtung (200), dazu ausgebildet, von der Steuereinrichtung (200) ein unidirektional übertragenes Datentelegramm zur Multicast-Übertragung von Daten zu einer Gruppe von Geräten, welche sich in einem definierten räumlichen Bereich befinden, zu empfangen, wobei das Datentelegramm eine Identifikationsinformation umfasst, welche den definierten räumlichen Bereich identifiziert, und dazu ausgebildet zu erkennen, ob es sich aktuell in dem durch die Identifikationsinformation identifizierten räumlichen Bereich befindet, umfassend
- ein Mittel zum Überwachen der Übertragungsdauer der unidirektionalen Übertragung des Datentelegramms von der zentralen Steuereinrichtung (200) zu der Vorrichtung (101, 102), und
- ein Mittel zum Auslösen einer vorbestimmten Sicherheitsreaktion, wenn die Übertragungsdauer einen vorgegebenen Wert überschreitet.

13. Vorrichtung nach Anspruch 12, wobei das Datentelegramm einen Zeitstempel umfasst, die Vorrichtung einen Zeitgeber (140) und Mittel zum Synchronisieren des Zeitgebers mit einem in der Steuereinrichtung (200) angeordneten Zeitgeber (240) umfasst, und das Mittel zum Überwachen dazu ausgebildet ist, die Übertragungsdauer in Abhängigkeit des in dem Datentelegramm enthaltenen Zeitstempels und unter Verwendung des Zeitgebers zu überwachen.

14. Vorrichtung (100') nach einem der Ansprüche 12 oder 13, dazu ausgebildet, eine zur bidirektionalen Kommunikation (510, 520) ausgebildete Datenverbindung mit der zentralen Steuereinrichtung (200') aufzubauen, über welche das Datentelegramm übertragen wird, wobei das Mittel zum Überwachen der Übertragungsdauer eine Diagnoseeinheit (260) umfasst, welche dazu ausgebildet ist,
- die Übertragungsqualität der zur bidirektionalen Kommunikation (510, 520) ausgebildeten Datenverbindung zu überwachen,
- die Übertragungsdauer der unidirektionalen Übertragung des Datentelegramms in Abhängigkeit der überwachten Übertragungsqualität zu überwachen, und
- eine vorbestimmte Sicherheitsreaktion auszulösen, wenn die Übertragungsdauer einen vorgegebenen Wert überschreitet.

15. Steuer- und Datenübertragungsanlage (10, 20), umfassend eine Steuereinrichtung (200, 200') gemäß einem der Ansprüche 9 bis 11, wenigstens eine Vorrichtung (101, 102, 100') gemäß einem der Ansprüche 12 bis 14, sowie ein Kommunikations-Netzwerk, über welches die Steuereinrichtung (200, 200') Daten zu der wenigstens einen Vorrichtung (101, 102, 100') übertragen kann.

## Claims

1. A method for transmitting data between a central control apparatus (200, 200') and at least one decentralized device (101, 102, 100'), having the following steps:
- generating, in the central control apparatus (200, 200'), a data telegram for the multicast transmission of data to a group of devices that are located in a defined spatial region, the data telegram comprising identification information that identifies the defined spatial region,
- unidirectionally transmitting the data telegram from the central control apparatus (200, 200') to at least one decentralized device (101, 102, 100'), wherein the at least one decentralized device is designed to recognize whether it is currently located in the spatial region identified by the identification information,
- monitoring the transmission duration of the transmission of the data telegram from the central control apparatus (200, 200') to the at least one decentralized device (101, 102, 100'), and
- triggering a predetermined safety reaction if the transmission duration exceeds a predetermined value.

2. The method according to claim 1, wherein the control apparatus (200) and the at least one decentralized device (101, 102) each comprise a timer (240, 140), and wherein the method further comprises the following steps:
- synchronizing the timer (240) in the control apparatus (200) with the respective timer (140) in the at least one decentralized device (101, 102),
- generating a time stamp by the control apparatus (200) and transmitting the time stamp within the data telegram, the transmission duration being monitored as a function of the time stamp.

3. The method according to claim 2, wherein the timers (240, 140) are synchronized before the at least one decentralized device (101, 102) is put into operation and/or at predetermined intervals of time.

4. The method according to any one of the preceding claims, further comprising the following steps:
- establishing a data connection configured for bidirectional communication (510, 520) between the control apparatus (200') and the at least one decentralized device (100'), the data telegram being transmitted unidirectionally from the control apparatus (200') to the at least one decentralized device (100') via this data connection, and
- monitoring the transmission quality of the data connection by the control apparatus (200') and/or by the at least one decentralized device (100'), the monitoring of the transmission duration of the transmission of the data telegram taking place as a function of the monitored transmission quality.

5. The method according to any one of the preceding claims, wherein the at least on decentralized device (101, 102, 100') is designed as an automated guided vehicle.

6. The method according to any one of the preceding claims, wherein the transmission of the data telegram takes place via a wireless network.

7. The method according to any one of the preceding claims, wherein the data telegram is used to transmit safety-relevant data.

8. The method according to any one of the preceding claims, wherein a safe communication protocol is used to transmit the data telegram.

9. A control apparatus (200, 200') for controlling a plurality of decentralized devices (101, 102, 100'), comprising:
- a means for generating a data telegram for the multicast transmission of data to a group of the plurality of decentralized devices (101, 102, 100'), wherein the devices of the group are located in a defined spatial region, and wherein the data telegram comprises identification information that identifies the defined spatial region,
- a means for unidirectionally transmitting the data telegram to at least one decentralized device (101, 102, 100'), wherein the at least one decentralized device is designed to recognize whether it is currently located in the spatial region identified by the identification information, and
- a means for monitoring the transmission duration of the unidirectional transmission of the data telegram from the central control apparatus (200, 200') to the at least one decentralized device (101, 102, 100').

10. The control apparatus (200) according to claim 9, wherein the means for monitoring the transmission duration comprises a timer (240) and a means for synchronizing the timer (240) with a timer (140) arranged in the at least one decentralized device (101, 102), and wherein the means for generating the data telegram is designed to generate a time stamp and transmit it within the data telegram.

11. The control apparatus (200') according any one of claims 9 or 10, designed to establish a data connection configured for bidirectional communication (510, 520) with the at least one decentralized device, wherein
- the means for unidirectionally transmitting the data telegram is designed for unidirectionally transmitting the data telegram via the data connection, and
- the means for monitoring the transmission duration comprises a diagnostic unit (260) that is designed to:
- monitor the transmission quality of the data connection configured for bidirectional communication (510, 520),
- monitor the transmission duration of the unidirectional transmission of the data telegram as a function of the monitored transmission quality, and
- trigger a predetermined safety reaction if the transmission duration exceeds a predetermined value.

12. A device (101, 102), in particular designed as an automated guided vehicle, that can be controlled by a central control apparatus (200), the device being designed to receive a unidirectionally transmitted data telegram for the multicast transmission of data to a group of devices that are located in a defined spatial region, the data telegram comprising identification information that identifies the defined spatial region, from the central control apparatus (200), and the device being designed to recognize whether it is currently located in the spatial region identified by the identification information, and the device comprising:
- a means for monitoring the transmission duration of the unidirectional transmission of the data telegram from the central control apparatus (200) to the device (101, 102), and
- a means for triggering a predetermined safety reaction if the transmission duration exceeds a predetermined value.

13. The device according to claim 12, wherein the data telegram comprises a time stamp, the device comprises a timer (140) and means for synchronizing the timer with a timer (240) arranged in the central control apparatus (200), and the means for monitoring is designed to monitor the transmission duration as a function of the time stamp contained in the data telegram and using the timer.

14. The device (100') according to any one of claims 12 or 13, designed to establish a data connection configured for bidirectional communication (510, 520) with the central control apparatus (200), via which the data telegram is transmitted, wherein the means for monitoring the transmission duration comprises a diagnostic unit (260) that is designed to:
- monitor the transmission quality of the data connection configured for bidirectional communication (510, 520),
- monitor the transmission duration of the unidirectional transmission of the data telegram as a function of the monitored transmission quality, and
- trigger a predetermined safety reaction if the transmission duration exceeds a predetermined value.

15. A control and data transmission system (10, 20), comprising a control apparatus (200, 200') according to any one of claims 9 to 11, at least one device (101, 102, 100') according to any one of claims 12 to 14, and a communication network via which the control apparatus (200, 200') can transmit data to the at least one device (101, 102, 100').

## Revendications

1. Procédé de transmission de données entre un dispositif de commande (200, 200') central et au moins un appareil (101, 102, 100') décentralisé, comportant les étapes :
- la génération, dans le dispositif de commande (200, 200') central, d'un télégramme de données pour la transmission multidiffusion de données à un groupe d'appareils, lesquels se trouvent dans une zone spatiale définie, dans lequel le télégramme de données comprend une information d'identification, laquelle identifie la zone spatiale définie,
- la transmission unidirectionnelle du télégramme de données du dispositif de commande (200, 200') central à au moins un appareil (101, 102, 100') décentralisé, dans lequel l'au moins un appareil décentralisé est conçu pour reconnaître s'il se trouve actuellement dans la zone spatiale identifiée par l'information d'identification,
- la surveillance de la durée de transmission de la transmission du télégramme de données du dispositif de commande (200, 200') central à l'au moins un appareil (101, 102, 100') décentralisé, et
- le déclenchement d'une réponse de sécurité prédéterminée lorsque la durée de transmission est supérieure à une valeur prédéterminée.

2. Procédé selon la revendication 1, dans lequel le dispositif de commande (200) et l'au moins un appareil (101, 102) décentralisé comprennent respectivement un temporisateur (240, 140), et dans lequel le procédé comprend en outre les étapes suivantes :
- la synchronisation du temporisateur (240) dans le dispositif de commande (200) à l'aide du temporisateur (140) respectif dans l'au moins un appareil (101, 102) décentralisé,
- la génération d'un horodatage par le dispositif de commande (200) et la transmission de l'horodatage au sein du télégramme de données, dans lequel la surveillance de la durée de transmission est effectuée en fonction de l'horodatage.

3. Procédé selon la revendication 2, dans lequel la synchronisation du temporisateur (240, 140) est effectuée avant la mise en service de l'au moins un appareil (101, 102) décentralisé et/ou à des intervalles temporels cycliques prédéterminés.

4. Procédé selon l'une quelconque des revendications précédentes, comprenant en outre les étapes suivantes :
- l'établissement d'une connexion de données conçue pour permettre une communication (510, 520) bidirectionnelle entre le dispositif de commande (200') et l'au moins un appareil (100') décentralisé, dans lequel le télégramme de données est transmis, par l'intermédiaire de ladite connexion de données, de manière unidirectionnelle du dispositif de commande (200') à l'au moins un appareil (100') décentralisé, et
- la surveillance de la qualité de transmission de la connexion de données par le dispositif de commande (200') et/ou par l'au moins un appareil (100') décentralisé, dans lequel la surveillance de la durée de transmission de la transmission du télégramme de données est effectuée en fonction de la qualité de transmission surveillée.

5. Procédé selon l'une quelconque des revendications précédentes, dans lequel l'au moins un appareil (101, 102, 100') décentralisé est conçu sous la forme de véhicule de transport sans conducteur.

6. Procédé selon l'une quelconque des revendications précédentes, dans lequel la transmission du télégramme de données est effectuée par l'intermédiaire d'un réseau sans fil.

7. Procédé selon l'une quelconque des revendications précédentes, dans lequel le télégramme de données est appliqué pour transmettre des données liées à la sécurité.

8. Procédé selon l'une quelconque des revendications précédentes, dans lequel, pour transmettre le télégramme de données, un protocole de communication sécurisé est appliqué.

9. Dispositif de commande (200, 200') permettant de commander une pluralité d'appareils (101, 102, 100') décentralisés, comprenant
- un moyen de génération d'un télégramme de données pour la transmission multidiffusion de données à un groupe de la pluralité d'appareils (101, 102, 100') décentralisés, dans lequel les appareils du groupe se trouvent dans une zone spatiale définie, et dans lequel le télégramme de données comprend une information d'identification, laquelle identifie la zone spatiale définie,
- un moyen de transmission unidirectionnelle du télégramme de données à l'au moins un appareil (101, 102, 100') décentralisé, dans lequel l'au moins un appareil décentralisé est conçu pour reconnaître s'il se trouve actuellement dans la zone spatiale identifiée par l'information d'identification, et
- un moyen de surveillance de la durée de transmission de la transmission unidirectionnelle du télégramme de données du dispositif de commande (200, 200') central à l'au moins un appareil (101, 102, 100') décentralisé.

10. Dispositif de commande (200) selon la revendication 9, dans lequel le moyen de surveillance de la durée de transmission comprend un temporisateur (240) et un moyen de synchronisation du temporisateur (240) avec un temporisateur (140) disposé dans l'au moins un appareil (101, 102) décentralisé, et dans lequel le moyen de génération du télégramme de données est conçu pour générer un horodatage et pour le transmettre au sein du télégramme de données.

11. Dispositif de commande (200') selon l'une quelconque des revendications 9 ou 10, conçu pour établir une connexion de données conçue pour permettre une communication (510, 520) bidirectionnelle avec l'au moins un appareil décentralisé, dans lequel
- le moyen de transmission unidirectionnelle du télégramme de données est conçu pour transmettre de manière unidirectionnelle le télégramme de données par l'intermédiaire de la connexion de données, et
- le moyen de surveillance de la durée de transmission comprend une unité de diagnostic (260), laquelle est conçue
- pour surveiller la qualité de transmission de la connexion de données conçue pour une communication (510, 520) bidirectionnelle,
- pour surveiller la durée de transmission de la transmission unidirectionnelle du télégramme de données en fonction de la qualité de transmission surveillée, et
- pour déclencher une réponse de sécurité prédéterminée lorsque la durée de transmission est supérieure à une valeur prédéterminée.

12. Dispositif (101, 102), en particulier conçu sous la forme d'un véhicule de transport sans conducteur, commandable à l'aide d'un dispositif de commande (200) central, conçu pour recevoir, du dispositif de commande (200), un télégramme de données transmis de manière unidirectionnelle pour la transmission multidiffusion de données à un groupe d'appareils, lesquels se trouvent dans une zone spatiale définie, dans lequel le télégramme de données comprend une information d'identification, laquelle identifie la zone spatiale définie et conçu pour reconnaître s'il se trouve actuellement dans la zone spatiale identifiée par l'information d'identification, comprenant
- un moyen de surveillance de la durée de transmission de la transmission unidirectionnelle du télégramme de données du dispositif de commande (200) central au dispositif (101, 102), et
- un moyen de déclenchement d'une réponse de sécurité prédéterminée lorsque la durée de transmission est supérieure à une valeur prédéterminée.

13. Dispositif selon la revendication 12, dans lequel le télégramme de données comprend un horodatage, le dispositif comprend un temporisateur (140) et un moyen de synchronisation du temporisateur avec un temporisateur (240) disposé dans le dispositif de commande (200), et le moyen de surveillance est conçu pour surveiller la durée de transmission en fonction de l'horodatage contenu dans le télégramme de données et à l'aide du temporisateur.

14. Dispositif (100') selon l'une quelconque des revendications 12 ou 13, conçu pour établir une connexion de données conçue pour permettre une communication (510, 520) bidirectionnelle avec le dispositif de commande (200') central, par l'intermédiaire de laquelle le télégramme de données est transmis, dans lequel le moyen de surveillance de la durée de transmission comprend une unité de diagnostic (260), laquelle est conçue
- pour surveiller la qualité de transmission de la connexion de données conçue pour une communication (510, 520) bidirectionnelle,
- pour surveiller la durée de transmission de la transmission unidirectionnelle du télégramme de données en fonction de la qualité de transmission surveillée, et
- pour déclencher une réponse de sécurité prédéterminée lorsque la durée de transmission est supérieure à une valeur prédéterminée.

15. Installation de commande et de transmission de données (10, 20), comprenant un dispositif de commande (200, 200') selon l'une quelconque des revendications 9 à 11, au moins un dispositif (101, 102, 100') selon l'une quelconque des revendications 12 à 14, ainsi qu'un réseau de communication par l'intermédiaire duquel le dispositif de commande (200, 200') peut transmettre des données à l'au moins un dispositif (101, 102, 100').
